# EUROPEAN PATENT SPECIFICATION

(11) **EP 2 866 382 B1**
(45) Date of publication and mention of the grant of the patent: **30.05.2018**
(21) Application number: 14195037.8
(22) Date of filing: 15.08.2007
(51) Int. Cl.: H04L 12/24

(54) **Method, apparatus and system for managing object instances**
Verfahren, Vorrichtung und System zur Verwaltung von Objektinstanzen
Procédé, appareil et système destinés à gérer des instances d'objets

(30) Priority: 15.08.2006 CN 200610112147
(43) Date of publication of application: 29.04.2015
(62) Divisional of application: 07800961.0
(73) Proprietor: Huawei Technologies Co., Ltd., Longgang District Shenzhen Guangdong 518129 (CN)
(72) Inventor: Wang, Dongqi, shenzhen (CN)
(74) Representative: Kreuz, Georg Maria

(56) References cited:
- EP-A1- 1 313 262
- US-A1- 2006 117 323
- ITU-T: "CORBA-based TMN services: Extensions to support coarse-grained interfaces", ITU-T RECOMMENDATION Q.816.1, XX, XX, 1 August 2001 (2001-08-01), page COMPLETE, XP002371559,
- Joon-Heup Kwon ET AL: "Design and Implementation of CORBA-Based Integrated Network Management System" In: "Networking - ICN 2001", 1 January 2001 (2001-01-01), Springer Berlin Heidelberg, Berlin, Heidelberg, XP055091955, ISBN: 978-3-54-042303-4 vol. 2094, pages 409-421, DOI: 10.1007/3-540-47734-9_41, * section 3.2 * * figures 9,10 *

## Description

### Field of the Invention

The present invention relates to network communications, and in particular, to methods and devices for managing object instances.

### Background of the Invention

With the development of network technologies and increase of network applications, networks become more and more complex and raise higher requirements for network device management. Devices being managed are scattered on a network due to network complexity. To manage these scattered devices being managed, a network device management system must be used.

The Digital Subscriber Line (DSL) Forum is a standardization organization. It formulates related standards for automatically configuring Customer Premises Equipment (CPE) and providing management functions remotely.

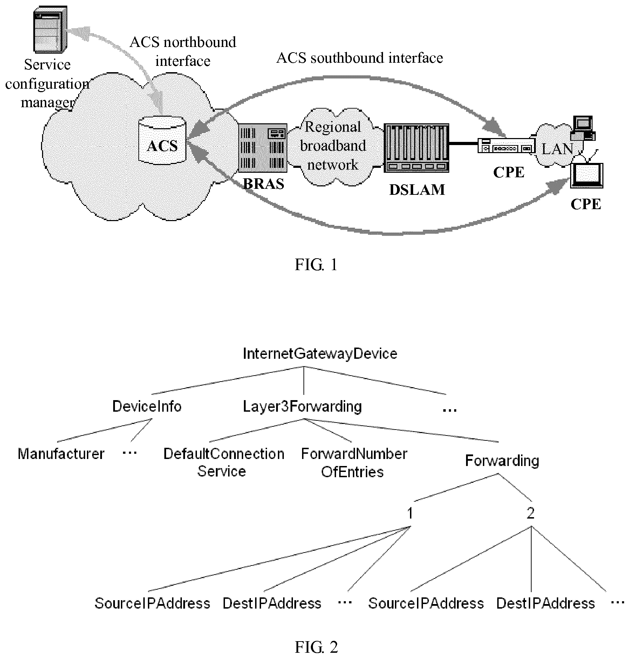

FIG. 1 shows an automatic configuration and management model defined by the DSL Forum. As shown in FIG. 1, the IP equipment in a family or an enterprise is called a CPE, and the CPE can be configured automatically and remotely by an Auto-Configuration Server (ACS) without user's participation.

The DSL Forum defines different data models for different types of CPE, for example, Set-Top Box (STB), Home Gateway (HGW), and Voice over IP (VoIP) phone. The data model is a set of CPE parameters.

TR-069 is a DSL Forum standard in the conventional art. TR-069 describes the basic information of a CPE in a tree structure. FIG. 2 shows a structure of an HGW data model 1.0 defined in TR-069. The following describes the data model shown in FIG. 2 in detail.

As shown in FIG. 2, the IntemetGatewayDevice is a root node, which includes many intermediate nodes and parameters, for example DeviceInfo and Layer3Forwarding. These two intermediate nodes also include many intermediate nodes or parameters. For example, the DeviceInfo node includes a Manufacturer parameter; the Layser3Forwarding node includes two instances of Forwarding besides DefaultConnectionService and ForwardNumberOfEntries. The CPE allocates instance 1 and instance 2 to the two instances of Forwarding (The instance number in TR-069 is represented by an integer.).

In TR069, the Forwarding node in Layer3Forwarding is an object, and Forwarding.1 and Forwarding.2 are two instances of the Forwarding object, which are differentiated by the instance numbers when being accessed.

TR069 identifies a parameter or an intermediate node by a path in accordance with the parameter or node, where the path is from the root to the parameter or node. Some examples are given as follows.
1. To access a common parameter, the names of all the nodes (including the parameter) from the root to the level where the parameter is located, which are partitioned by a dot in the middle to form the path, need to be connected.
   Taking the Manufacturer parameter in DeviceInfo as an example, the path for accessing the parameter is InternetGatewayDevice.DeviceInfo.Mananufacturer.
2. To access a parameter of a dynamic instance of an object, the user needs to add an instance number to a node of the dynamic instance as a suffix and a dot is used for partition to form a path.

For example, the path for accessing a SourceIPAddress parameter of instance 1 of instance InternetGatewayDevice.Layer3Forwarding.Forwarding is as follows:
InternetGatewayDevice.Layer3Forwarding.Forwarding.1.SourceIPAddress

For example, the path for accessing a SourceIPAddress parameter of instance 2 of instance InternetGatewayDevice.Layer3Forwarding.Forwarding is as follows:
InternetGatewayDevice.Layer3Forwarding.Forwarding.2.SourceIPAddress

A Remote Procedure Call Protocol (RPC) method of AddObject and DeleteObject provided by TR-069 are used to add or delete a dynamic instance.

For example, to add an instance to the InternetGatewayDevice.Layer3Forwarding.Forwarding object in the CPE data model shown in FIG. 2, the ObjectName parameter may be set to "InternetGatewayDevice.Layer3Forwarding.Forwarding." when calling the RPC method of AddObject, that is, an instance of the object is generated. The allocation of an instance number depends on the CPE.

To delete an instance of an object, an instance number needs to be added after the object name. For example, to delete the InternetGatewayDevice.Layer3Forwarding.Forwarding.2 instance, the ObjectName parameter may be set to "InternetGatewayDevice.Layer3Forwarding.Forwarding.2." when calling the RPC method of DeleteObject, that is, the instance with instance number 2 of the object is deleted.

During the implementation of the present invention, the inventor finds that the method for managing object instances in the conventional art has the following weaknesses.

For example, when the ACS needs to call the AddObject RPC method of two different CPEs to create instances of the InternetGatewayDevice.Layer3Forwarding.Forwarding object, two CPEs may return different instance numbers for a same object instance because the instance numbers are allocated by two different CPEs. For example, one CPE may return an instance number of 1, while the other CPE may return an instance number of 2. Instances created by different CPEs are as follows:
InternetGatewayDevice.Layer3Forwarding.Forwarding.1
InternetGatewayDevice.Layer3Forwarding.Forwarding.2

Thus, when there is a need to configure a same object instance of multiple CPEs through TR-069, TR-069 is required to access each CPE for configuring the object instance in turn because the instance ID of a same object instance is inconsistent in different CPEs; that is, each CPE returns different instance IDs (instance numbers), which makes the configuration process complex.

Document ITU-T: "CORBA-based TMN services: Extensions to support coarse-grained inerfaces", ITU-T RECOMMENDATION Q.816.1, XX,XX, 1 August 2001 (2001-08-01), page COMPLETE, XP002371559 discloses a mechanism by which a managing system can access multiple managed objects through a single facade. Both the facade and the multiple managed objects are on the managed system.

Document Joon-Heup Kwon ETAL: "Dsign and Implemention of Corba-Based Integrated Network Management System" In: "Networking-ICN 2001", 1 January 2001 (2001-01-01), Springer Berlin Heidelberg, Berlin, Heidelberg, XP055091955, ISBN: 978-3-54-042303-4 vol. 2094, pages 409-421, DOI: 10.2007/3-540-47734-9_41, discloses managing multiple object instances through a base object which selects objects according to parameters form CORBA manager object and a naming tree, or according to name of a base object, scope, names of attributes and filtering expression.

### Summary of the Invention

Embodiments of the present invention provide a method, apparatus and system for managing object instances to configure or access object instances of devices being managed in batches.

Embodiments of the present invention are implemented through the following technical solution:

A management device on a network, comprising:
an index ID obtaining module, adapted to obtain an index ID of an object instance of a device being managed of different devices being managed by the management device, wherein the index ID is associated with the object instance on a one-to-one basis; and
an index ID applying module, adapted to carry the index ID obtained by the index ID obtaining module in a related message of the object instance associated with the index ID, wherein the message is sent to the different devices being managed so that each of the different devices being managed is able to query an instance ID and index ID corresponding relation stored in the each of the different devices being managed and obtain object instance information associated with the index ID.

A device being managed on a network, comprising:
an instance ID and index ID corresponding relation storing module, adapted to store a corresponding relation between an instance ID of an object instance and an index ID created by the device being managed; wherein the index ID is allocated to each object instance which needs being managed and is associated with the object instance on a one-to-one basis; and
an index ID querying module, adapted to query, after receiving a related message of the object instance carrying index ID indicating the index ID, the instance ID and index ID corresponding relation storing module for the corresponding relation information according to the index ID, and obtain object instance information associated with the index ID, wherein the related message is sent to different devices being managed including the device being managed.

A method for managing object instances, comprising:
obtaining index ID of an object instance in a device being managed of different devices being managed, wherein the index ID is associated with the object instance on a one-to-one basis; and
carrying the index ID of the object instance in a related message of the object instance, and sending the related message to the different devices being managed so that each of the different devices being managed is able to query an instance ID and index ID corresponding relation stored in the each of the different devices being managed and obtain object instance information associated with the index ID.

A method for managing object instances, comprising:
storing a corresponding relation information between an instance ID of an object instance and an index ID created by a device being managed; wherein the index ID is allocated to each object instance which needs being managed and is associated with the object instance on a one-to-one basis;
receiving a related message carrying index ID of an object instance in the device being managed, wherein the related message is sent to different devices being managed including the device being managed;
querying the corresponding relation information between an instance ID of an object instance and an index ID information according to the index ID information, and obtain object instance information associated with the index ID.

According to the technical solution provided in the present invention, embodiments of the present invention differentiate object instances by using index IDs in a network management device (for example, ACS), and maintain the corresponding relation between the object instances and the index IDs in a device being managed (for example, CPE). Thus, the object instances in devices being managed (for example, CPE) may be configured or accessed in batches by using a unified command. This overcomes the weakness of the conventional art in which devices being managed (for example, CPE) must be configured in turn due to inconsistency of the instance ID of a same object instance in different devices being managed (for example, CPE).

### Brief Description of the Drawings

FIG. 1 shows a schematic diagram of an automatic configuration and management model defined by the DSL Forum;
FIG. 2 shows a schematic diagram of a structure of an HGW data model defined in TR-09 in the conventional art;
FIG. 3 shows a schematic diagram of a structure of an ACS according to an embodiment of the present invention;
FIG. 4 shows a schematic diagram of a structure of a CPE according to an embodiment of the present invention;
FIG. 5 is a flowchart of a method according to an embodiment of the present invention;
FIG. 6 shows a schematic diagram of a structure of a CPE data model according to an embodiment of the present invention; and
FIG. 7 shows a schematic diagram of a structure of a corresponding relation table between object instances maintained in each CPE and index IDs according to an embodiment of the present invention.

### Detailed Description of the Embodiments

Embodiments of the present invention provide a method, apparatus and system for managing object instances. Embodiments of the present invention use index IDs in a network management device (for example, ACS) to differentiate different object instances, carry corresponding index IDs in related messages of various object instances that the management device sends to a device being managed (for example, CPE), and maintain the corresponding relation between instance IDs of object instances and index IDs in the device being managed.

Embodiments of the present invention are hereinafter described in detail with reference to the accompanying drawings. The method, apparatus and system provided in embodiments of the present invention are applicable to the remote management of dynamic instances defined in related standards (for example, TR-069) of the DSL Forum. Taking TR-069 as an example, the apparatuses provided in an embodiment of the present invention include a management device and a device being managed.

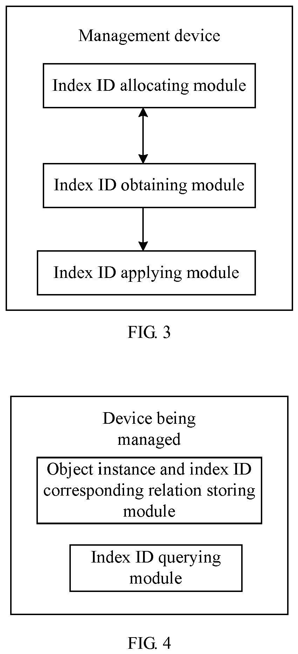

FIG. 3 shows a structure of the management device provided in an embodiment of the present invention. The management device includes an index ID allocating module, an index ID obtaining module, and an index ID applying module.

The index ID allocating module is adapted to allocate a corresponding index ID to each object instance managed by the management device, and to send the corresponding relation between the allocated index IDs and the object instances to the index ID obtaining module. In practical applications, the index ID may be customized by a manufacturer or uniformly specified by a standardization organization. The corresponding relation between index IDs and object instances may also be stored in other background devices. Thus, the index ID allocating module is optional.

The index ID obtaining module is adapted to obtain index ID information of object instances. The management device indexes object instances in devices being managed which are managed by the management device according to the index ID information. In the DSL Forum, the preceding management device is an ACS. In practical applications, the management device may obtain the index ID information by querying the index ID allocating module or a background device that stores the corresponding relation between index IDs and object instances.

The index ID applying module is adapted to carry the related index ID information of an object instance obtained by the index ID obtaining module in related messages of the object instance that the management device sends to the device being managed (for example, CPE). The related messages include messages associated with the AddObject method (for adding an object instance), DeleteObject method (for deleting an object instance), GetParameterValues method (for obtaining information of one or multiple parameters of an object instance, GetParameterNames method (for obtaining the name of one or multiple parameters of an object instance), and SetParameterValues method (for setting information of one or multiple parameters of an object instance).

FIG. 4 shows a structure of the device being managed provided in an embodiment of the present invention. The device being managed includes an object instance and index ID corresponding relation storing module and an index ID querying module.

The object instance and index ID corresponding relation storing module is adapted to store the corresponding relation created by the device being managed (for example, CPE) between index IDs and instance IDs of each object instance in a form such as an corresponding relation table, where the corresponding relation table may include two columns: one column corresponds to index IDs and the other column gives instance IDs of object instances associated with the index IDs.

The index ID querying module is adapted to obtain index ID information carried in a related message after receiving the related message of an object instance carrying an index ID from the management device, query the object instance and index ID corresponding relation storing module for the corresponding relation information according to the index ID information, and obtain object instance information associated with the index ID.

The system for managing object instances in an embodiment of the present invention includes a management device and a device being managed.

The management device is adapted to obtain index ID information of an object instance in a device being managed by the management device; and to carry the index ID information in a related message of the object instance associated with the index ID, where the related message is sent to the device being managed.

The device being managed is adapted to store a corresponding relation created by the device being managed between the instance ID of the object instance and the index ID; to obtain the object instance information that is associated with the index ID information carried in the related message according to the stored corresponding relation after receiving the related message from the management device; and to perform related operations on the object instance according to the contents of the related message.

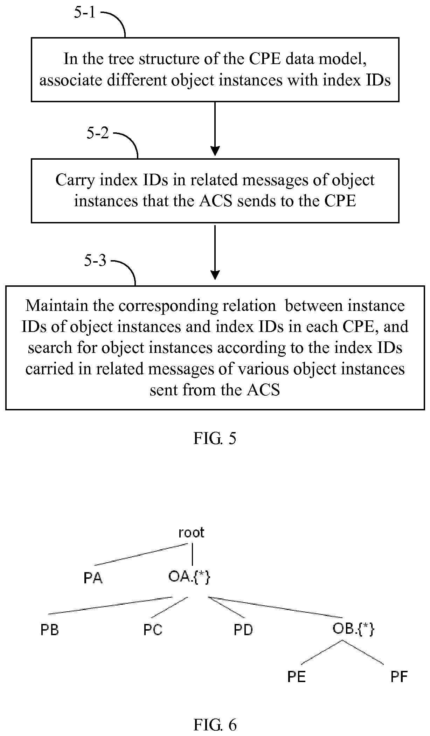

FIG. 5 is a flowchart of the method provided in an embodiment of the present invention, taking the management device being the ACS defined by the DSL Forum and the device being managed being the CPE defined by the DSL Forum as an example. The method includes the following steps:

Step 5-1: In the tree structure of the CPE data model, different object instances are associated with different index IDs.

FIG. 6 shows a structure of a CPE data model in TR-069 provided in an embodiment of the present invention. The CPE data model also adopts a tree structure, which is similar to that is adopted by TR-069 in the conventional art.

The root in FIG. 6 is the root node. All the paths must start from the root node. The root node may have objects, for example, objects OA and OB. The suffix of {*} of an object name indicates that the object may have multiple instances. The root node and objects may have common parameters. For example, parameter PA in FIG. 6 is a parameter in the root node; Parameters PB, PC and PD are parameters in object OA, and parameters PE and PF are parameters in object OB.

In an embodiment of the present invention, the ACS uses an index ID to uniquely identify an object instance when managing the CPE data model shown in FIG. 6, where the index ID is associated with the object instance on a one-to-one basis. In practical applications, the index ID may be defined by the ACS, or customized by a manufacturer, or uniformly specified by a standardization organization.

For example, the index ID of an instance of object OA in FIG. 6 may be set to "IPTVConnection". Then, "IPTVConnection" may uniquely identify an instance of object OA.

Step 5-2: An index ID associated with an object instance is carried in a related message of the object instance that the ACS sends to the CPE.

After using index IDs to differentiate each object instance, the ACS may manage each object instance according to the index IDs, and carry index IDs of various object instances in related messages of various object instances that the ACS sends to the CPE. Managing object instances includes creating and deleting object instances, and accessing, querying and modifying a set of parameters of object instances. The following describes these operations in detail.

In an embodiment of the present invention, a message that the ACS sends to the CPE for creating or deleting an object instance must include an index ID that identifies the object instance uniquely.

The AddObject RPC method of TR-069 may be used by the ACS to create an object instance. This method uses the path name of a set of objects of which new instances need to be created as the parameter. For example, the path name parameter ObjectName may be Top. Group. Object. This parameter does not include an instance ID; that is, the instance ID is allocated by the CPE.

The DeleteObject RPC method of TR-069 may be used by the ACS to delete established instances of an object. This method needs to use the path name of a set of objects of which instances are already established as the parameter. For example, the path name parameter ObjectName may be Top.Group.Object.2.This parameter includes an instance ID.

An embodiment of the present invention extends the ObjectName parameter in the preceding AddObject method and DeleteObject method. Table 1 shows the extended ObjectName parameter.

**Table 1 Description of the extended ObjectName parameter**

| Parameter | Type | Description |
|---|---|---|
| ObjectName | String (256) | Used as the path name of a set of objects of which new instances need to be added (or deleted). For the path name, a dot (.) must be added after the last node of the object level name. |
| | | To use an index ID corresponding to the object instance specified by the ACS, the index ID must be added after the path name of a set of objects to be added (or deleted). The format is as follows: "Path name. {index ID}." |
| Other parameters | | |

For example, when the ACS needs to create an instance associated with an index ID of "IPTVConnection" in the OA shown in FIG. 6, the value of the ObjectName parameter of the AddObject method is as follows:
ObjectName = "root.OA. {IPTVConnection}."

Then, the ACS may send a message relating to the AddObject method that carries the preceding ObjectName parameter to each CPE that needs to configure the preceding instance.

When the ACS needs to delete the preceding instance associated with the index ID of "IPTVConnection", the value of the ObjectName parameter of the DeleteObject method is as follows:
ObjectName = "root.OA. {IPTVConnection}."

Then, the ACS may send a message relating to the DeleteObject method that carries the preceding ObjectName parameter to each CPE that needs to delete the preceding instance.

The ACS may also manage the parameters of the object instance according to the index ID corresponding to the preceding object instance.

For example, to access parameter PB of the instance associated with the index ID of "IPTVConnection" of the preceding object OA, the following path may be used:
root.OA. {IPTVConnection}.PB, where" {}" is used to separate the intermediate node from the index ID, and the separation may be replaced by other modes.

The GetParameterValuse/SetParameterValues RPC method of TR-069 is used to obtain parameter values of one or multiple objects. In the conventional art, the instance ID (instance number) in these RPC methods is represented by a numeric value.

For example, to access the SourceIPAddress parameter with the instance ID of 2 of InternetGatewayDevice.Layer3Forwarding.Forwarding., the following path may be used:
InternetGatewayDevice.Layer3 Forwarding.Forwarding.2. SourceIPAddress

In an embodiment of the present invention, if the instance ID is associated with an index ID of "IPTVConnecton", the following path is used:
InternetGatewayDevice.Layer3Forwarding.Forwarding. {IPTVConnection} . SourceIP Address.

Because index IDs are associated with object instances on a one-to-one basis, the correctness of accessing a set of parameters can be guaranteed.

Step 5-3: The corresponding relation between instance IDs of object instances and index IDs in each CPE is maintained, and the object instances are searched for according to the index IDs carried in related messages of various object instances sent from the ACS.

The preceding corresponding relation between the instance IDs of the object instances and the index IDs needs to be stored and managed in each CPE to ensure that each CPE can operate related object instances or a set of parameters properly.

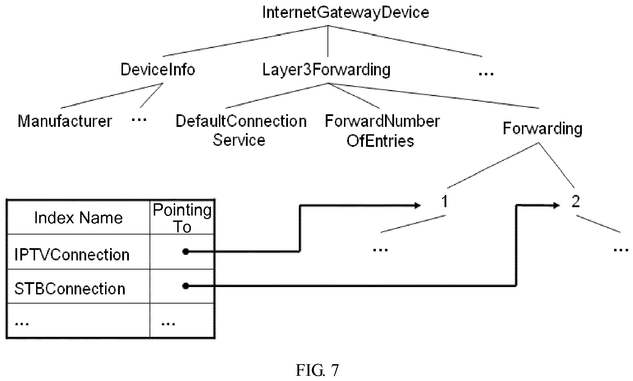

A corresponding relation table between the instance IDs of object instances and index IDs may be maintained in each CPE. Taking the TR069 data model shown in FIG. 2 as an example, the structure of the corresponding relation table is shown in FIG. 7.

As shown in FIG. 7, the corresponding relation table has two columns: one column corresponds to index IDs, and the other column lists instance IDs associated with the index IDs.

The index with an index ID of PTVConnection points to the object instance IntenetGatewayDevice.Layer3Forwarding. Forwarding. 1.

The index with an index ID of STBConnection points to the object instance InternetGatewayDevice.Layer3Forwarding.Forwarding.2.

After the CPE receives a message carrying a specified index ID that is associated with the AddObject method from the ACS, the CPE adds an entry to the corresponding relation table after the CPE allocates an instance ID to a new instance, where the entry includes the specified index ID and allocated instance ID.

After the CPE receives a message carrying a specified index ID that is associated with the DeleteObject method from the ACS, the CPE searches the corresponding relation table for an object instance according to the specified index ID, and deletes the object instance and entry where the specified index ID is associated with the deleted instance ID in the corresponding relation table.

After the CPE receives messages carrying a specified index ID that are associated with the GetParameterValues, GetParameterNames and SetParameterValues methods from the ACS, the CPE searches the corresponding relation table for an object instance according to the specified index ID, and operates the object instance according to instructions of the messages.

Although the present invention has been described through several exemplary embodiments, the invention is not limited to such embodiments. It is apparent that those skilled in the art can make various modifications and variations to the invention without departing from the invention. The present invention is intended to cover such modifications and variations provided that they fall in the scope of protection defined by the following claims.

## Claims

1. A management device on a network, comprising:
an index ID obtaining module, adapted to obtain an index ID of an object instance of a device being managed of different devices being managed by the management device, wherein the index ID is associated with the object instance on a one-to-one basis; and
an index ID applying module, adapted to carry the index ID obtained by the index ID obtaining module in a related message of the object instance associated with the index ID, wherein the message is sent to the different devices being managed so that each of the different devices being managed is able to query an instance ID and index ID corresponding relation stored in the each of the different devices being managed and obtain object instance information associated with the index ID.

2. The management device of claim 1, further comprising:
an index ID allocating module, adapted to allocate an index ID to each object instance managed by the management device, and to send a corresponding relation between the allocated index IDs and the object instances to the index ID obtaining module.

3. The management device of claim 1 or 2, wherein the related message is a message associated with
a method for deleting a specific object instance from the device being managed of the different devices being managed, or
a method for adding a specific object instance to the device being managed of the different devices being managed, or
a method for obtaining information or a name of one or multiple parameters of a specific object instance, or
a method for setting information of one or multiple parameters of a specific object instance.

4. A device being managed on a network, comprising:
an instance ID and index ID corresponding relation storing module, adapted to store a corresponding relation between an instance ID of an object instance and an index ID created by the device being managed; wherein the index ID is allocated to each object instance which needs being managed and is associated with the object instance on a one-to-one basis; and
an index ID querying module, adapted to query, after receiving a related message of the object instance carrying the index ID, the instance ID and index ID corresponding relation storing module for the corresponding relation information according to the index ID, and obtain instance ID associated with the index ID;
wherein the related message is sent to different devices being managed including the device being managed.

5. The device being managed of claim 4, wherein the corresponding relation created by the device being managed between index IDs and instance IDs of each object instance in a form of corresponding relation table, wherein the corresponding relation table comprises two columns; one column corresponds to index IDs and the other column gives instance IDs of object instances associated with the index IDs.

6. The device being managed of claim 4 or 5, is further adapted to perform related operations on the object instance according to the contents of the related message.

7. The device being managed of claim 4 or 5, is further adapted to
add a new created object instance associated with the index ID in the device being managed, or
delete the object instance and the stored corresponding relation associated with the index ID, from the device being managed, or
obtain information or a name of one or multiple parameters of a specific object instance, set information of one or multiple parameters of a specific object instance.

8. A method in a management device for managing object instances, comprising:
obtaining index ID of an object instance in a device being managed of different devices being managed, wherein the index ID is associated with the object instance on a one-to-one basis; and
carrying the index ID of the object instance in a related message of the object instance, and sending the related message to the different devices being managed so that each of the different devices being managed is able to query an instance ID and index ID corresponding relation stored in the each of the different devices being managed and obtain object instance information associated with the index ID.

9. The method of claim 8, further comprising:
allocating an index ID to each object instance which needs being managed, wherein the index IDs are associated with the object instances on a one-to-one basis.

10. The method of claim 8 or 9, wherein the related message is a message associated with
a method for deleting a specific object instance from the device being managed of the different devices being managed, or
a method for adding a specific object instance to the device being managed of the different devices being managed, or
a method for obtaining information or a name of one or multiple parameters of a specific object instance, or
a method for setting information of one or multiple parameters of a specific object instance.

11. A method in a device being managed for managing object instances, comprising:
storing a corresponding relation information between an instance ID of an object instance and an index ID created by the device being managed; wherein the index ID is allocated to each object instance which needs being managed and is associated with the object instance on a one-to-one basis;
receiving a related message carrying the index ID of an object instance in the device being managed, wherein the related message is sent to different devices being managed including the device being managed;
querying the corresponding relation information between an instance ID of an object instance and an index ID according to the index ID, and obtain object instance information associated with the index ID.

12. The method of claim 11, further comprising the method step of
performing the related operation on the object instance associated with the index ID according to contents of the related message.

13. The method of claim 11 or 12, wherein the step of performing comprises:
adding a specific object instance to the device being managed; and
storing the corresponding relation information between an instance ID of an added object instance and an index ID.

14. The method of claim 11 or 12, wherein the step of performing comprises:
deleting, by the device being managed, the object instance associated with the index ID, and
deleting, by the device being managed, the stored corresponding relation between the index ID and the instance ID of the deleted object instance from the device being managed.

15. The method of claim 11 or 12, wherein the step of performing comprises one step of:
obtaining information or name of one or multiple parameters of the object instance associated with the index ID, and
setting information of one or multiple parameters of a specific object instance.

## Patentansprüche

1. Managementvorrichtung in einem Netzwerk, umfassend:
ein Index-ID-Erhaltemodul, ausgelegt zum Erhalten einer Index-ID einer Objektinstanz von einer gemanagten Vorrichtung von verschiedenen durch die Managementvorrichtung gemanagten Vorrichtungen, wobei die Index-ID mit der Objektinstanz auf eineindeutiger Grundlage assoziiert ist; und
ein Index-ID-Anwendungsmodul, ausgelegt zum Führen der durch das Index-ID-Erhaltemodul erhaltenen Index-ID in einer mit der Index-ID assoziierten zugehörigen Nachricht der Objektinstanz, wobei die Nachricht an die verschiedenen gemanagten Vorrichtungen gesendet wird, so dass jede der verschiedenen gemanagten Vorrichtungen in der Lage ist zum Abfragen einer Instanz-ID- und Index-IDentsprechenden Zugehörigkeit, die in jeder der verschiedenen gemanagten Vorrichtungen gespeichert ist, und zum Erhalten von mit der Index-ID assoziierten Objektinstanzinformationen.

2. Managementvorrichtung nach Anspruch 1, ferner Folgendes umfassend:
ein Index-ID-Zuweisungsmodul, ausgelegt zum Zuweisen einer Index-ID an jede durch die Managementvorrichtung gemanagte Objektinstanz und zum Senden einer entsprechenden Zugehörigkeit zwischen den zugewiesenen Index-IDs und den Objektinstanzen an das Index-ID-Erhaltemodul.

3. Managementvorrichtung nach Anspruch 1 oder 2, wobei die zugehörige Nachricht eine Nachricht ist, die assoziiert ist mit
einem Verfahren zum Löschen einer spezifischen Objektinstanz von der gemanagten Vorrichtung der verschiedenen gemanagten Vorrichtungen, oder
einem Verfahren zum Hinzufügen einer spezifischen Objektinstanz zu der gemanagten Vorrichtung von den verschiedenen gemanagten Vorrichtungen, oder
einem Verfahren zum Erhalten von Informationen oder einem Namen von einem oder mehreren Parametern einer spezifischen Objektinstanz, oder
einem Verfahren zum Einstellen von Informationen von einem oder mehreren Parametern einer spezifischen Objektinstanz.

4. In einem Netzwerk gemanagte Vorrichtung, umfassend:
ein Instanz-ID- und Index-ID-entsprechende-Zugehörigkeit-Speichermodul, ausgelegt zum Speichern einer entsprechenden Zugehörigkeit zwischen einer Instanz-ID einer Objekt-Instanz und einer durch die gemanagte Vorrichtung geschaffenen Index-ID; wobei die Index-ID jeder Objektinstanz zugewiesen wird, welche gemanagt werden muss und mit der Objektinstanz auf einer eineindeutigen Grundlage assoziiert ist; und
ein Index-ID-Abfragemodul, ausgelegt zum Abfragen, nach dem Empfangen einer zugehörigen Nachricht der die Index-ID führenden Objektinstanz, des Instanz-ID- und Index-ID-entsprechende-Zugehörigkeit-Speichermoduls nach den entsprechenden Zugehörigkeitsinformationen gemäß der Index-ID, und zum Erhalten der mit der Index-ID assoziierten Instanz-ID;
wobei die zugehörige Nachricht an verschiedene gemanagte Vorrichtungen gesendet wird einschließlich der gemanagten Vorrichtung.

5. Gemanagte Vorrichtung nach Anspruch 4, wobei die entsprechende Zugehörigkeit zwischen Index-IDs und Instanz-IDs von jeder Objektinstanz in einer Form einer entsprechenden Zugehörigkeitstabelle durch die gemanagte Vorrichtung geschafft, wobei die entsprechende Zugehörigkeitstabelle zwei Spalten umfasst; eine Spalte entspricht den Index-IDs und die andere Spalte gibt Instanz-IDs von mit den Index-IDs assoziierten Objektinstanzen an.

6. Gemanagte Vorrichtung nach Anspruch 4 oder 5, ferner ausgelegt zum Durchführen zugehöriger Operationen an der Objektinstanz gemäß dem Inhalt der zugehörigen Nachricht.

7. Gemanagte Vorrichtung nach Anspruch 4 oder 5, ferner ausgelegt zum Hinzufügen einer neugeschaffenen mit der Index-ID assoziierten Objektinstanz in der gemanagten Vorrichtung, oder
Löschen der Objektinstanz und der gespeicherten entsprechenden mit der Index-ID assoziierten Zugehörigkeit von der gemanagten Vorrichtung, oder
Erhalten von Informationen oder eines Namens von einem oder mehreren Parametern einer spezifischen Objektinstanz,
Einstellen von Informationen von einem oder mehreren Parametern einer spezifischen Objektinstanz.

8. Verfahren in einer Managementvorrichtung zum Managen von Objektinstanzen, die folgenden Schritte umfassend:
Erhalten einer Index-ID einer Objektinstanz in einer gemanagten Vorrichtung von verschiedenen gemanagten Vorrichtungen, wobei die Index-ID mit der Objektinstanz auf eineindeutiger Grundlage assoziiert ist; und
Führen der Index-ID der Objektinstanz in einer zugehörigen Nachricht der Objektinstanz und Senden der zugehörigen Nachricht an die verschiedenen gemanagten Vorrichtungen, so dass jede der verschiedenen gemanagten Vorrichtungen in der Lage ist zum Abfragen einer Instanz-ID- und Index-IDentsprechenden Zugehörigkeit, die in jeder der verschiedenen gemanagten Vorrichtungen gespeichert ist, und zum Erhalten von mit der Index-ID assoziierten Objektinstanzinformationen.

9. Verfahren nach Anspruch 8, ferner den folgenden Schritt umfassend:
Zuweisen einer Index-ID an jede Objektinstanz, welche gemanagt werden muss, wobei die Index-IDs mit den Objektinstanzen auf einer eineindeutigen Grundlage assoziiert sind.

10. Verfahren nach Anspruch 8 oder 9, wobei die zugehörige Nachricht eine Nachricht ist, die assoziiert ist mit
einem Verfahren zum Löschen einer spezifischen Objektinstanz von der gemanagten Vorrichtung der verschiedenen gemanagten Vorrichtungen, oder
einem Verfahren zum Hinzufügen einer spezifischen Objektinstanz zu der gemanagten Vorrichtung von den verschiedenen gemanagten Vorrichtungen, oder
einem Verfahren zum Erhalten von Informationen oder einem Namen von einem oder mehreren Parametern einer spezifischen Objektinstanz, oder
einem Verfahren zum Einstellen von Informationen von einem oder mehreren Parametern einer spezifischen Objektinstanz.

11. Verfahren in einer gemanagten Vorrichtung zum Managen von Objektinstanzen, die folgenden Schritte umfassend:
Speichern einer entsprechenden Zugehörigkeitsinformation zwischen einer Instanz-ID einer Objekt-Instanz und einer durch die gemanagte Vorrichtung geschaffenen Index-ID; wobei die Index-ID jeder Objektinstanz zugewiesen wird, welche gemanagt werden muss und mit der Objektinstanz auf einer eineindeutigen Grundlage assoziiert ist;
Empfangen einer zugehörigen Nachricht, die die Index-ID einer Objektinstanz führt, in der gemanagten Vorrichtung, wobei die zugehörige Nachricht an verschiedene gemanagte Vorrichtungen gesendet wird einschließlich der gemanagten Vorrichtung; Abfragen der entsprechenden Zugehörigkeitsinformation zwischen einer Instanz-ID einer Objektinstanz und einer Index-ID gemäß der Index-ID, und zum Erhalten von mit der Index-ID assoziierten Instanzinformationen.

12. Verfahren nach Anspruch 11, das ferner den Verfahrensschritt umfasst des Durchführens der zugehörigen Operation an der mit der Index-ID assoziierten Objektinstanz gemäß dem Inhalt der zugehörigen Nachricht.

13. Verfahren nach Anspruch 11 oder 12, wobei der Schritt des Durchführens Folgendes umfasst:
Hinzufügen einer spezifischen Objektinstanz zu der gemanagten Vorrichtung; und
Speichern der entsprechenden Zugehörigkeitsinformationen zwischen einer Instanz-ID einer hinzugefügten Objektinstanz und einer Index-ID.

14. Verfahren nach Anspruch 11 oder 12, wobei der Schritt des Durchführens Folgendes umfasst:
Löschen, durch die gemanagte Vorrichtung, der mit der Index-ID assoziierten Objektinstanz, und
Löschen, durch die gemanagte Vorrichtung, der gespeicherten entsprechenden Zugehörigkeit zwischen der Index-ID und der Instanz-ID der gelöschten Objektinstanz von der gemanagten Vorrichtung.

15. Verfahren nach Anspruch 11 oder 12, wobei der Schritt des Durchführens einen Schritt umfasst des:
Erhaltens von Informationen oder eines Namens von einem oder mehreren Parametern der mit der Index-ID assoziierten Objektinstanz, und
Einstellens von Informationen von einem oder mehreren Parametern einer spezifischen Objektinstanz.

## Revendications

1. Dispositif de gestion sur un réseau, comprenant :
un module d'obtention d'ID d'index, adapté de façon à obtenir un ID d'index d'une instance d'objet d'un dispositif étant géré parmi différents dispositifs étant gérés par le dispositif de gestion, l'ID d'index étant associé à l'instance d'objet de manière individuelle ; et
un module d'application d'ID d'index, adapté de façon à acheminer l'ID d'index obtenu par le module d'obtention d'ID d'index dans un message lié de l'instance d'objet associée à l'ID d'index, le message étant envoyé aux différents dispositifs étant gérés de manière à ce que chacun des différents dispositifs étant gérés soit capable d'interroger une relation correspondante d'ID d'instance et d'ID d'index stockée dans chacun des différents dispositifs étant gérés et d'obtenir une information d'instance d'objet associée à l'ID d'index.

2. Dispositif de gestion selon la revendication 1, comprenant en outre :
un module d'attribution d'ID d'index, adapté de façon à attribuer un ID d'index à chaque instance d'objet gérée par le dispositif de gestion et à envoyer une relation correspondante entre les ID d'index attribués et les instances d'objets au module d'obtention d'ID d'index.

3. Dispositif de gestion selon la revendication 1 ou 2, dans lequel le message lié est un message associé à
un procédé pour supprimer une instance d'objet spécifique du dispositif étant géré parmi les différents dispositifs étant gérés, ou à
un procédé pour ajouter une instance d'objet spécifique au dispositif étant géré parmi les différents dispositifs étant gérés, ou à
un procédé pour obtenir une information ou un nom d'un ou de plusieurs paramètres d'une instance d'objet spécifique, ou à
un procédé pour définir une information d'un ou de plusieurs paramètres d'une instance d'objet spécifique.

4. Dispositif étant géré sur un réseau, comprenant :
un module de stockage de relation correspondante d'ID d'instance et d'ID d'index, adapté de façon à stocker une relation correspondante entre un ID d'instance d'une instance d'objet et un ID d'index créé par le dispositif étant géré ; l'ID d'index étant attribué à chaque instance d'objet qui a besoin d'être gérée et étant associé à l'instance d'objet de manière individuelle ; et
un module d'interrogation d'ID d'index, adapté de façon à interroger, après avoir reçu un message lié de l'instance d'objet acheminant l'ID d'index, le module de stockage de relation correspondante d'ID d'instance et d'ID d'index pour l'information de relation correspondante selon l'ID d'index, et à obtenir l'ID d'instance associée à l'ID d'index ;
le message lié étant envoyé à différents dispositifs étant gérés comprenant le dispositif étant géré.

5. Dispositif étant géré selon la revendication 4, dans lequel la relation correspondante créée par le dispositif étant géré entre les ID d'index et les ID d'instance de chaque instance d'objet sous une forme de table de relation correspondante, la table de relation correspondante comprenant deux colonnes ; une colonne correspondant aux ID d'index et l'autre colonne donnant les ID d'instance d'instances d'objets associées aux ID d'index.

6. Dispositif étant géré selon la revendication 4 ou 5, adapté en outre de façon à exécuter des opérations liées sur l'instance d'objet selon le contenu du message lié.

7. Dispositif étant géré selon la revendication 4 ou 5, adapté en outre de façon à ajouter une nouvelle instance d'objet créée associée à l'ID d'index dans le dispositif étant géré, ou à
supprimer l'instance d'objet et la relation correspondante stockée associée à l'ID d'index, du dispositif étant géré, ou à
obtenir une information ou un nom d'un ou de plusieurs paramètres d'une instance d'objet spécifique,
définir une information d'un ou de plusieurs paramètres d'une instance d'objet spécifique.

8. Procédé dans un dispositif de gestion pour gérer des instances d'objets, comprenant :
l'obtention de l'ID d'index d'une instance d'objet d'un dispositif étant géré parmi différents dispositifs étant gérés, l'ID d'index étant associé à l'instance d'objet de manière individuelle ; et
l'acheminement de l'ID d'index de l'instance d'objet dans un message lié de l'instance d'objet, et l'envoi du message lié aux différents dispositifs étant gérés de manière à ce que chacun des différents dispositifs étant gérés soit capable d'interroger une relation correspondante d'ID d'instance et d'ID d'index stockée dans chacun des différents dispositifs étant gérés et d'obtenir une information d'instance d'objet associée à l'ID d'index.

9. Procédé selon la revendication 8, comprenant en outre :
l'attribution d'un ID d'index à chaque instance d'objet qui a besoin d'être gérée, les ID d'index étant associés aux instances d'objets de manière individuelle.

10. Procédé selon la revendication 8 ou 9, dans lequel le message lié est un message associé à
un procédé pour supprimer une instance d'objet spécifique du dispositif étant géré parmi les différents dispositifs étant gérés, ou à
un procédé pour ajouter une instance d'objet spécifique au dispositif étant géré parmi les différents dispositifs étant gérés, ou à
un procédé pour obtenir une information ou un nom d'un ou de plusieurs paramètres d'une instance d'objet spécifique, ou à
un procédé pour définir une information d'un ou de plusieurs paramètres d'une instance d'objet spécifique.

11. Procédé dans un dispositif étant géré pour gérer des instances d'objets, comprenant :
le stockage d'une information de relation correspondante entre un ID d'instance d'une instance d'objet et un ID d'index créé par le dispositif étant géré ; l'ID d'index étant attribué à chaque instance d'objet qui a besoin d'être gérée et étant associé à l'instance d'objet de manière individuelle ;
la réception d'un message lié acheminant l'ID d'index d'une instance d'objet dans le dispositif étant géré, le message lié étant envoyé à différents dispositifs étant gérés comprenant le dispositif étant géré ;
l'interrogation de l'information de relation correspondante entre un ID d'instance d'une instance d'objet et un ID d'index selon l'ID d'index, et l'obtention de l'information d'instance d'objet associée à l'ID d'index.

12. Procédé selon la revendication 11, comprenant en outre l'étape de procédé consistant à :
exécuter l'opération liée sur l'instance d'objet associée à l'ID d'index selon le contenu du message lié.

13. Procédé selon la revendication 11 ou 12, dans lequel l'étape d'exécution comprend :
l'addition d'une instance d'objet spécifique au dispositif étant géré ; et
le stockage de l'information de relation correspondante entre un ID d'instance d'une instance d'objet ajoutée et un ID d'index.

14. Procédé selon la revendication 11 ou 12, dans lequel l'étape d'exécution comprend :
la suppression, par le dispositif étant géré, de l'instance d'objet associée à l'ID d'index, et
la suppression, par le dispositif étant géré, de la relation correspondante stockée entre l'ID d'index et l'ID d'instance de l'instance d'objet supprimée du dispositif étant géré.

15. Procédé selon la revendication 11 ou 12, dans lequel l'étape d'exécution comprend une étape consistant à :
obtenir une information ou un nom d'un ou de plusieurs paramètres de l'instance d'objet associée à l'ID d'index, et à
définir une information d'un ou de plusieurs paramètres d'une instance d'objet spécifique.
